Europäisches Patentamt

European Patent Office

Office européen des brevets

(19)

(11) Numéro de publication : **0 079 584**
**B1**

(12) FASCICULE DE BREVET EUROPÉEN

(45) Date de publication du fascicule du brevet :
12.02.86

(51) Int. Cl.⁴ : **H 02 K 3/18**, H 02 K 3/52,
H 02 K 1/24

(21) Numéro de dépôt : 82110406.4

(22) Date de dépôt : 11.11.82

(54) **Rotor à pôles saillants pour machine dynamoélectrique avec bobines démontables sans démontage des pôles.**

(30) Priorité : 17.11.81 FR 8121458

(43) Date de publication de la demande :
25.05.83 Bulletin 83/21

(45) Mention de la délivrance du brevet :
12.02.86 Bulletin 86/07

(84) Etats contractants désignés :
CH DE FR GB LI SE

(56) Documents cités :
CH-A-    108 795
DE-A- 1 958 501
DE-C-    162 466
FR-A- 2 106 982
FR-A- 2 147 540
FR-A- 2 465 349
GB-A-    622 032

(73) Titulaire : **ALSTHOM**
**38, avenue Kléber**
**F-75784 Paris Cédex 16 (FR)**

(72) Inventeur : **Gillet, Roger**
**24, avenue d'Altkirch**
**F-90000 Belfort (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

L'invention concerne un rotor à pôles saillants pour machine dynamoélectrique avec bobines démontables sans démontage des pôles.

Les bobines inductrices des grandes machines électriques à pôles saillants sont généralement constituées par un empilage de spires autour du noyau polaire. Ces spires sont placées chacune dans un plan tangentiel et elles se succèdent radialement de l'intérieur vers l'extérieur. Elles sont en général fabriquées et assemblées avant l'installation sur le pôle, mais présentent l'inconvénient de ne pouvoir être mises en place (ou retirées) qu'après dépose du pôle, car celui-ci comporte, à l'extrémité radialement extérieure du noyau polaire, un épanouissement polaire empêchant l'extraction radiale de la bobine.

Par ailleurs le circuit magnétique rotorique des machines électriques à pôles saillants est souvent constitué à partir de segments formés par découpage de tôles minces en arc de couronnes circulaires et assemblés en couronnes complètes. Ces dernières sont empilées longitudinalement et assemblées par des tirants parallèles à l'axe du rotor de manière à constituer une jante supportant les noyaux polaires.

Pour la fixation des noyaux polaires sur la jante, on fait alors classiquement appel à des technologies diverses connues pour permettre une dépose ultérieure du pôle : clés, queues d'aronde, peignes, vis, etc... Ceci présente deux inconvénients

— perte de résistance mécanique par introduction de matière ne participant pas à la tenue aux efforts centrifuges

— introduction d'une discontinuité dans le chemin magnétique, à la liaison entre le pôle et la jante.

C'est pourquoi il a été proposé dans le document FR-A 2 465 349, de réaliser une bobine susceptible d'être démontée sans démontage du noyau polaire. Ceci présente l'avantage de simplifier la réparation ou le remplacement de la bobine, et aussi de permettre de former les pôles en même temps que les segments de la jante, par découpage de tôles minces selon un tracé qui englobe non seulement un segment de jante mais aussi le ou les noyaux et épanouissements polaires rattachés à ce segment. Selon ce document la bobine est formée de spires qui se succèdent perpendiculairement aux flancs du noyau polaire et chaque spire est formée de deux demi-spires faisant chacune un demi-tour autour du noyau polaire et elle-même formée par au moins une bande conductrice souple dont la largeur s'étend radialement par rapport à l'axe du rotor. Les demi-spires successives sont connectées de manière amovible les unes à la suite des autres dans deux zones de raccordement sur les deux flancs longitudinalement extrêmes du noyau polaire. Cette disposition permet d'éviter d'une manière simple les inconvénients des dispositifs de fixation des noyaux polaires sur la jante. Mais la souplesse des bandes conductrices oblige, pour appliquer fermement la bobine contre les flancs latéraux des noyaux polaires et éviter tout déplacement des conducteurs, à disposer entre les bobines des pôles successifs des câbles interpolaires isolantes qui doivent être réalisées avec grand soin et compliquent le démontage de la bobine.

La présente invention a pour but la réalisation d'un rotor à pôles saillants pour machine dynamoélectrique permettant un démontage facile des bobines sans créer de difficultés quant à la constitution du circuit magnétique, ni quant au maintien des conducteurs de la bobine.

Elle a pour objet un rotor à pôles saillants pour machine dynamoélectrique avec bobines démontables sans démontage des pôles, ce rotor tournant autour d'un axe longitudinal et comportant

— une jante magnétique de forme cylindrique autour de l'axe,

— des noyaux polaires magnétiques fixés en formant des saillies à hauteur radiale sur la jante et répartis circonférentiellement, chacun de ces noyaux présentant deux flancs longitudinalement extrêmes dans deux plans perpendiculaire à l'axe du rotor et deux flancs latéraux s'étendant longitudinalement entre ces deux flancs extrêmes,

— un épanouissement polaire magnétique disposé à l'extrémité radialement externe de chaque noyau polaire et débordant au moins circonférentiellement de chaque côté de ce noyau,

— et une bobine constituée par un conducteur électrique enroulé autour de chaque noyau polaire entre la jante et la partie débordante de l'épanouissement polaire, ce conducteur formant une succession de spires faisant chacune un tour autour du noyau polaire et isolées les unes des autres par des couches isolantes,

— chacune de ces spires étant elle-même divisée selon sa longueur en plusieurs fractions de spires successives constituées chacune de plusieurs bandes métalliques superposées en étages radialement successifs avec leurs largeurs disposées perpendiculairement aux flancs du noyau polaire, chacune de ces lames suivant au plus un flanc latéral, un flanc extrême et l'autre flanc latéral du noyau polaire de manière à permettre le montage de la bobine par déplacement de lame parallèlement à l'axe du rotor,

— ces étages étant disposés dans le prolongement les uns des autres d'une fraction de spire à la suivante,

— les lignes de séparation entre les extrémités de deux lames situées à un même étage dans deux fractions de spires successives étant décalées d'un étage à l'autre, pour permettre au courant électrique rencontrant une ligne de séparation entre deux lames d'un étage de passer dans au moins une bande d'un étage adjacent.

Ce rotor est caractérisé par le fait que cette bobine est munie de moyens de serrage permanent pour appliquer à chaque zone d'extrémité de chaque lame de chaque fraction de spire, une force de serrage permanente sensiblement radiale et assurer ainsi un bon contact électrique entre les lames des fractions de spires successives, ces moyens de serrage étant amovibles de manière à permettre en cas de défaut de démonter la bobine en extrayant séparément les diverses lames.

On peut remarquer que l'on a déjà proposé, dans le brevet FR-A 1 489 931 de réaliser chaque spire d'une bobine polaire à l'aide de lames métalliques radialement superposées dont les largeurs s'étendaient perpendiculairement aux flancs du noyau polaire. Mais la disposition ainsi proposée ne tendait nullement à permettre un démontage de la bobine sans démontage du pôle, car les lames métalliques utilisées étaient soudées les unes aux autres, ce qui semblait nécessaire pour assurer la continuité électrique du conducteur de la bobine.

A l'aide des figures schématiques ci-jointes, on va décrire ci-après, à titre non limitatif, comment l'invention peut être mise en œuvre.

La figure 1 représente une vue schématique d'une face extrême d'un rotor selon l'invention avec arrachements partiels pour montrer le rotor en coupe par deux plans perpendiculaires à l'axe, un premier plan de coupe passant entre deux couronnes de l'empilement constituant le circuit magnétique, l'autre plan de coupe passant dans l'épaisseur d'une couronne suivant celle qui touche le premier plan de coupe, une bobine polaire étant enlevée.

La figure 2 représente une vue partielle à échelle agrandie du même rotor selon le détail II de la figure 1, montrant les extrémités de deux bobines polaires.

La figure 3 représente une vue en coupe selon un plan radial III-III de la figure 2 du bord d'un pôle du même rotor, dans l'axe d'un noyau polaire.

La figure 4 représente une vue en coupe par un plan IV-IV de la figure 2 parallèle au plan III-III d'un coin de pôle du même rotor.

La figure 5 représente une vue de dessus d'un coin de pôle du même rotor selon une flèche F de la figure 4.

La figure 6 représente une vue partielle en perspective éclatée d'une spire d'une bobine polaire du même rotor.

La figure 7 représente une vue analogue à celle de la figure 6, d'un autre rotor selon l'invention, différent du premier seulement par la disposition des prolongements des lames conductrices constituant les bobines polaires.

Les rotors qui vont être décrits constituent par exemple l'inducteur d'une machine synchrone.

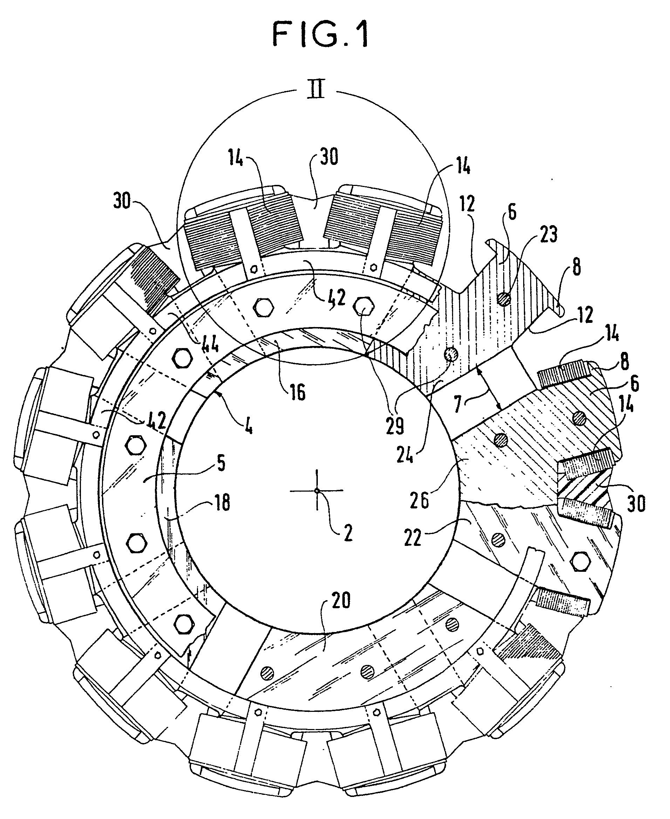

Le rotor conformément à la figure 1, tourne autour d'un axe 2 disposé selon sa longueur et il comporte une jante 4 de forme cylindrique autour de l'axe, et des pôles répartis angulairement autour de l'axe. Ces pôles forment saillies radiales sur la face externe de la jante et s'étendent selon la longueur du rotor. Ils constituent avec la jante le circuit magnétique du rotor.

Chaque pôle comporte un noyau polaire 6 en saillie sur la jante et un épanouissement 8 polaire à l'extrémité externe du noyau polaire, cet épanouissement débordant angulairement de part et d'autre de ce noyau. Ce dernier présente deux flancs extrêmes 10 disposés sensiblement dans deux plans perpendiculaires à l'axe du rotor, du côté des deux extrémités de celui-ci, respectivement, et deux flancs latéraux 12 s'étendant selon la longueur du rotor entre les deux flancs extrêmes et radialement entre la jante et l'épanouissement polaire.

De manière classique la jante 4 est constituée par un empilement selon la longueur du rotor de sections planes constituées chacune par une couronne dont l'axe est celui du rotor, chaque couronne étant constituée de plusieurs segments 16, 18, 20, 22, se succédant angulairement. Les segments d'une couronne sont décalés angulairement d'un pas polaire par rapport aux segments successifs tels que 24, 26 de la couronne suivante de manière à éviter de constituer des lignes de moindre résistance mécanique de la jante et de perturber la distribution du flux magnétique. Les couronnes successives sont serrées les unes contre les autres par des plaques d'appui 5 appliquées contre les faces extrêmes du circuit magnétique par des tirants 23 et 29 qui traversent les couronnes successives parallèlement à l'axe du rotor. Ces segments sont constitués chacun par une seule pièce de tôle découpée pour former non seulement un segment angulaire d'une section plane de la jante mais aussi une section plane de plusieurs pôles consécutifs incluant les épanouissements polaires, de manière que l'ensemble du circuit magnétique soit formé par l'empilement des couronnes.

Ces segments peuvent être appelés « segments à pôles intégrés ». Ils portent chacun les sections de trois pôles. Ils sont au nombre de quatre dans chaque couronne. Ils sont limités angulairement aux flancs des deux pôles extrêmes, de sorte que, au sein de chaque couronne quatre intervalles libres 7 subsistent entre les extrémités des segments consécutifs. Ces intervalles constituent des évents permettant le passage radial d'un gaz de refroidissement provenant de l'intérieur de la jante.

Le rotor comporte en outre des bobines, une bobine telle que 14 étant enroulée autour de chaque noyau polaire entre la jante 4 et la partie débordante de l'épanouissement polaire 8. Les bobines sont calées latéralement par des cales interpolaires 30 qui peuvent être réalisées de manière simple et être extraites longitudinalement.

Chaque bobine est constituée par une succession de spires d'un conducteur électrique, et par des couches isolantes 15 séparant ces spires.

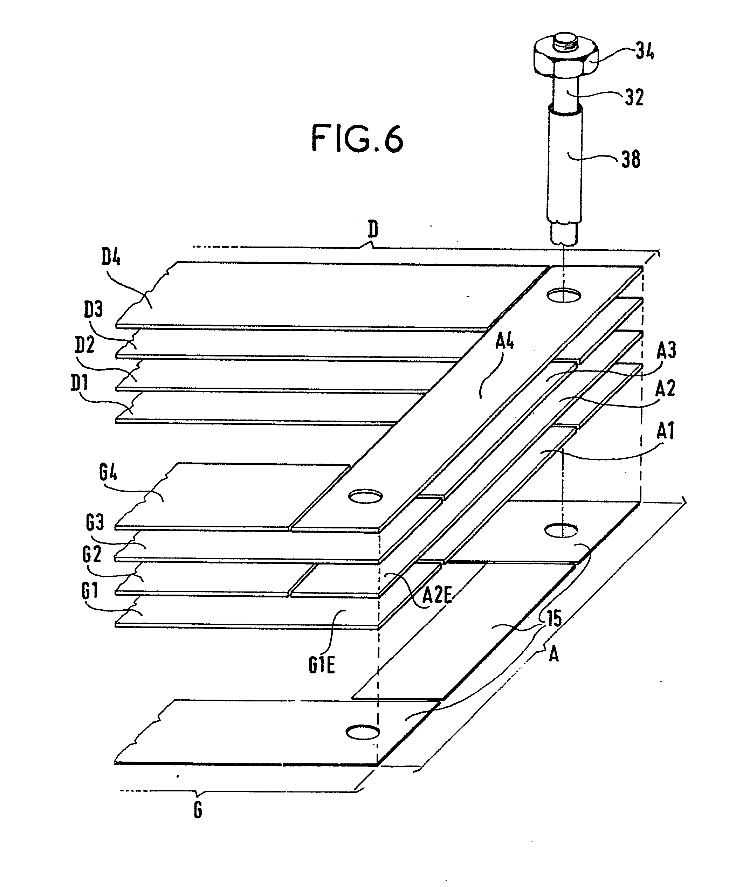

Chacune des spires est divisée selon sa longueur de manière connue en plusieurs fractions G, A, D (voir figure 6) constituées chacune de plusieurs bandes métalliques superposées.

Conformément à l'invention, chacune des fractions de spires de la bobine est constituée par des lames métalliques rigides G1, ... G4, A1, ... A4 constituant lesdites bandes et superposées en étages radialement successifs avec leurs largeurs disposées perpendiculairement aux flancs 10, 12 du noyau polaire. Chacune de ces lames suit au plus un flanc latéral, un flanc extrême et l'autre flanc latéral du noyau polaire de manière à pouvoir être éloignée de ce noyau par déplacement parallèle à l'axe 2 du rotor. Les étages sont disposés dans le prolongement les uns des autres d'une fraction de spire à la suivante, et les lignes de séparation entre les extrémités de deux lames situées à un même étage dans deux fractions de spires successives sont décalées d'un étage à l'autre.

De préférence chacune des lames métalliques A1 a ses deux extrémités voisines chacune d'un coin de noyau polaire où se rejoignent un flanc extrême 10 et un flanc latéral 12 de manière à permettre, lorsqu'on veut démonter la bobine, un accès facile aux moyens de serrage 32, 34 disposés au voisinage de ces extrémités.

De préférence encore chaque spire est constituée de quatre fractions de spires dont trois seulement G, A, D sont représentées, et qui sont disposées chacune selon l'un des quatre côtés d'un rectangle entourant le noyau polaire 6. Chaque étage de la spire complète est formé de quatre lames métalliques G1, A1, D1 sensiblement rectangulaires qui sont deux lames « latérales » G1, D1 dont les grands côtés s'étendent longitudinalement le long des deux flancs latéraux 12 du noyau polaire et deux lames « extrêmes » A1 dont les grands côtés s'étendent sensiblement circonférentiellement le long des deux flancs extrêmes 10 du noyau polaire. Une lame latérale G1 et une lame extrême A1 constituent des lames « concourantes » à chacun des quatre coins du rectangle de la spire, et l'une de ces deux lames concourantes G1 est « prolongée » c'est-à-dire que sa longueur s'étend au-delà du bord du flanc le long duquel elle s'étend pour occuper une « zone de coin » G1E s'étendant sur la largeur de l'autre lame (A1) de manière à assurer sensiblement la continuité de la largeur de la couche.

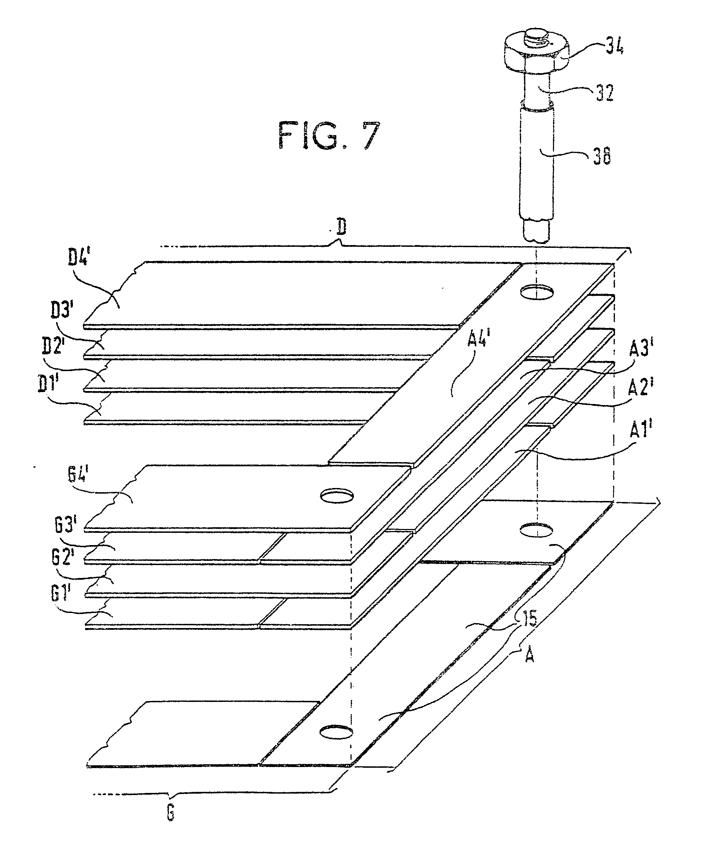

Les lames prolongées des étages successifs sont à chaque coin alternativement une lame latérale G1, G3 et une lame extrême A2, A4 de manière à décaler les lignes de séparation entre lames concourantes. Une même lame peut être prolongée à ses deux extrémités comme représenté sur la figure 6, les lames superposées le long d'un flanc du noyau polaire étant alors alternativement une lame courte A1 ou A3 et une lame longue A2 ou A4. Les lames superposées peuvent cependant aussi être prolongées chacune à une seule extrémité alternativement d'un côté et de l'autre, de manière à avoir toutes une même longueur le long d'un flanc du noyau polaire. De telles lames G1'.. G4', A1'... A4', etc... sont représentées sur la figure 7.

Il serait par ailleurs possible de réaliser chaque étage de chaque spire sous la forme de deux équerres avec seulement deux lignes de séparation à deux coins diagonalement opposés du rectangle de la spire.

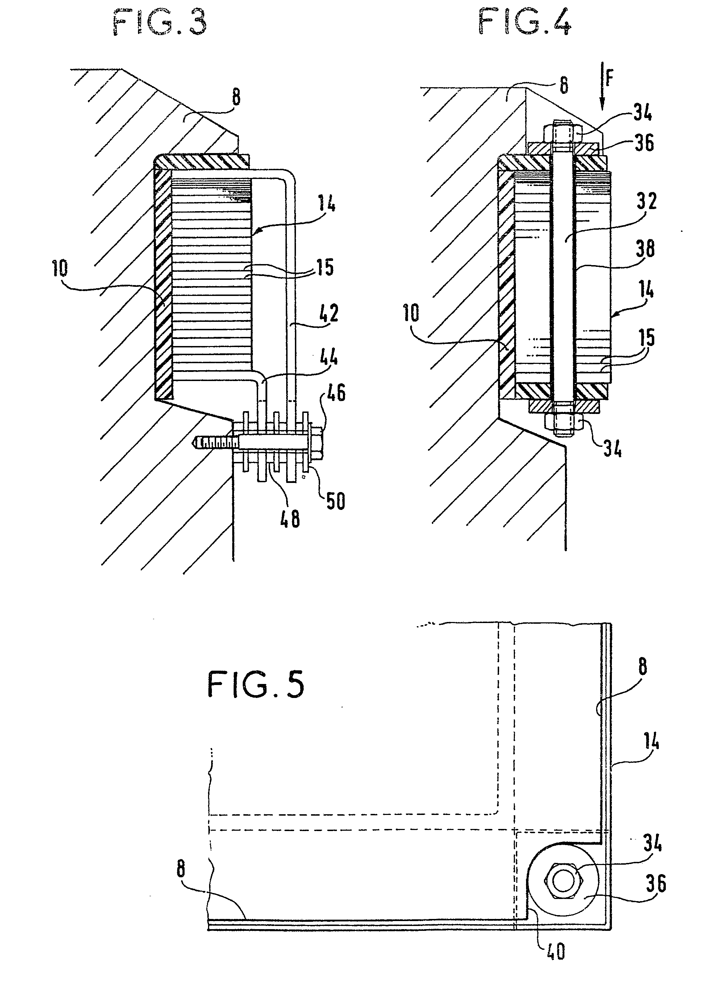

Les moyens de serrage de la bobine sont constitués par un tirant 32 s'étendant radialement à chaque coin sur toute la hauteur de la bobine en passant dans des trous percés dans les lames métalliques prolongées (G1, A2, G3, A4) et dans les couches isolantes 15 dans la zone de coin. Ce tirant est pourvu à au moins une de ses extrémités de moyens d'appui réglables 34 pour assurer le serrage radial de la bobine. Ces moyens d'appui sont constitués par exemple par des écrous 34 vissés sur le tirant 32, et s'appuyant sur les couches isolantes extrêmes par l'intermédiaire de rondelles 36. Les tirants sont entourés de gaines isolantes 38 (Figure 4). Ils peuvent être extraits quasi radialement après dévissage des écrous grâce à des évidements 40 creusés dans l'épanouissement polaire à chaque coin du noyau polaire. Les couches isolantes 15 sont collées sous les lames inférieures G1, A1, D1 et sur les lames supérieures G4, A4, D4.

Les dispositions qui viennent d'être décrites s'appliquent avantageusement au cas précédemment décrit où les pôles sont intégrés à la jante, mais peuvent s'appliquer à d'autre cas.

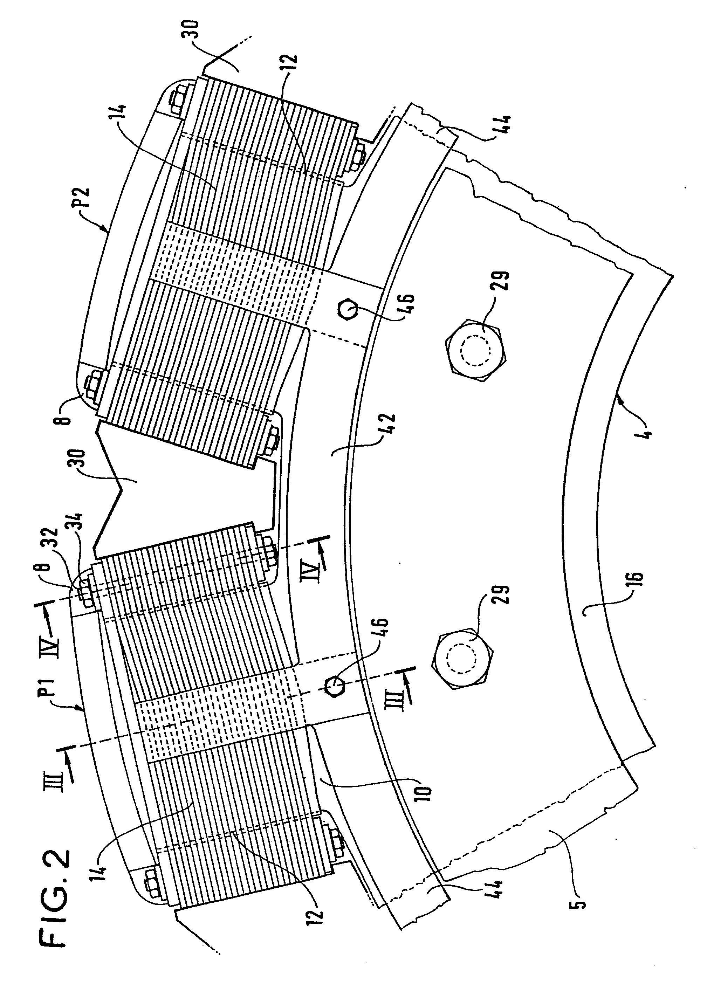

Le mode d'interconnexion des bobines des pôles voisins est représenté sur les figures 2 et 3. La spire supérieure de la bobine d'un pôle P1 se raccorde à celle d'un pôle voisin P2 par un conducteur plat 42 dont le plan est perpendiculaire à l'axe du rotor et qui forme dans ce plan un U dont la base est disposée en regard d'une face d'extrémité de la jante 4. Les spires inférieures de ces deux bobines se raccordent à celles de pôles non représentés situés de part et d'autre des pôles P1 et P2 par des conducteurs plats 4 de forme analogue mais disposés plus près de la jante. Les bases des U sont fixées à la jante par l'intermédiaire de boulons isolés 46 et de rondelles isolantes de diamètres différents 48 et 50.

Le nombre d'étages dans chaque spire est par exemple de 4, chacune des lames métalliques étant constituée de cuivre, épaisse de 2 mm et large de 80 mm, la force de serrage exercée par chaque tirant 32 est par exemple de 33 000 N environ.

**Revendications**

1. Rotor à pôles saillants pour machine dynamoélectrique avec bobines démontables sans démontage des pôles, ce rotor tournant autour d'un axe longitudinal (2) et comportant.

— une jante magnétique (4) de forme cylindrique autour de l'axe,

— des noyaux polaires magnétiques (6) fixés en formant des saillies à hauteur radiale sur la jante et répartis circonférentiellement, chacun de ces noyaux présentant deux flancs longitudinalement extrêmes (10) dans deux plans perpendiculaire à l'axe du rotor et deux flancs latéraux (12) s'étendant longitudinalement entre ces deux flancs extrêmes,

— un épanouissement polaire magnétique (8) disposé à l'extrémité radialement externe de chaque noyau polaire (6) et débordant au moins circonférentiellement de chaque côté de ce noyau,

— et une bobine (14) constituée par un conducteur électrique enroulé autour de chaque noyau polaire entre la jante et la partie débordante de l'épanouissement polaire, ce conducteur formant une succession de spires faisant chacune un tour autour du noyau polaire et isolées les unes des autres par des couches isolantes,

— chacune de ces spires étant elle-même divisée selon sa longueur en plusieurs fractions de spires successives (G, A, D) constituées chacune de plusieurs lames métalliques rigides superposées (G1, G2, G3, G4, A1, A2, A3, A4), en étages radialement successifs avec leurs largeurs disposées perpendiculairement aux flancs (10, 12) du noyau polaire, chacune de ces lames suivant au plus un flanc latéral, un flanc extrême et l'autre flanc latéral du noyau polaire de manière à permettre le montage de la bobine par déplacement de lame parallèlement à l'axe (2) du rotor,

— ces étages étant disposés dans le prolongement les uns des autres d'une fraction de spire à la suivante,

— les lignes de séparation entre les extrémités de deux lames situées à un même étage dans deux fractions de spires successives étant décalées d'un étage à l'autre, pour permettre au courant électrique rencontrant une ligne de séparation entre deux lames (G1, A1) d'un étage de passer dans au moins une bande (A2) d'un étage adjacent,

— ce rotor étant caractérisé par le fait que cette bobine est munie de moyens de serrage permanent (32, 34) pour appliquer à chaque zone d'extrémité (GIE) de chaque lame (G1) de chaque fraction de spire (G) une force de serrage permanente sensiblement radiale et assurer ainsi un bon contact électrique entre les lames des fractions de spires successives, ces moyens de serrage étant amovibles de manière à permettre en cas de défaut de démonter la bobine en extrayant séparément les diverses lames.

2. Rotor selon la revendication 1, caractérisé par le fait que chaque spire est constituée de quatre fractions de spires (G, A, D) disposées chacune selon l'un des quatre côtés d'un rectangle entourant le noyau polaire (6), chaque étage de la spire complète étant formé de quatre lames métalliques (G1, A1, D1) sensiblement rectangulaires qui sont deux lames « latérales » (G1, D1) dont les grands côtés s'étendent longitudinalement le long des deux flancs latéraux (12) du noyau polaire et deux lames « extrêmes » (A1) dont les grands côtés s'étendent sensiblement circonférentiellement le long des deux flancs extrême (A1) étant des lames « concourantes » à chacun des quatre coins du rectangle de la spire, l'une de ces deux lames concourantes (G1) étant une lame « prolongée » dont la longueur s'étend au-delà du bord du flanc le long duquel elle s'étend pour occuper une « zone de coin » (G1E) s'étendant sur la largeur de l'autre lame (A1) de manière à assurer sensiblement la continuité de la largeur de la couche,

— les lames prolongées des étages successifs étant à chaque coin alternativement une lame latérale (G1, G3) et une lame extrême (A2, A4) de manière à décaler les lignes de séparation entre lames concourantes,

— les moyens de serrage de la bobine comportant un tirant (32) s'étendant radialement à chaque coin sur toute la hauteur de la bobine en passant dans des trous percés dans les lames métalliques prolongées (G1, A2, G3, A4) et dans les couches isolantes (15) dans la zone de coin, ce tirant étant pourvu à au moins une de ses extrémités de moyens d'appui réglables (34) pour assurer le serrage radial de la bobine.

**Claims**

1. A rotor with protruding poles for a dynamoelectric machine having coils which can be removed without removing the poles, said rotor rotating about a longitudinal axis (2) and comprising

— a magnetic rim (4) which is cylindrical about the axis,

— magnetic pole cores (6) which are fixed in such a way that they form protrusions with a radial height on the rim and which are spaced out circumferentially, each of these cores having two longitudinal end surfaces (10) in two planes perpendicular to the axis of the rotor, and two side surfaces (12) which extend longitudinally between said two end surfaces,

— a magnetic pole head (8) disposed at the radially outer end of each pole core (6) and projecting at least circumferentially on each side of said core,

— and a coil (14) constituted by an electric conductor wound around each pole core between the rim and the projecting part of the pole head, this conductor forming a succession of turns each surrounding the pole core and being insulated from one another by insulating layers,

— each of these turns itself being divided along its length into a plurality of successive portions of turns (G, A, D), each one of these portions being constituted by a plurality of superimposed rigid metal blades (G1, G2, G3, G4, A1, A2, A3, A4), in radially successive stages with their widths disposed perpendicularly to the surfaces (10, 12) of the pole core, each of these blades following at the most one side surface, one end surface and the other side surface of the pole core, so as to allow the coil to be mounted by displacing the blade in a direction parallel to the axis (2) of the rotor,

— these stages being disposed in line with one another from one portion of turn to the next one,

— the separation lines between the ends of two blades situated at the same stage in two successive fractions of turns being staggered from one stage to the next to allow the electric current which meets a separation line between two blades (G1, A1) of one stage to pass into at least one blade (A2) of an adjacent stage,

— this rotor being characterized in that said coil is provided with permanent clamping means (32, 34) to apply to each end zone (GIE) of each blade (G1) of each portion of turn (G) a substantially radial permanent clamping force and to ensure thereby a good electric contact between the blades of successive portions of turns, these clamping means being removable so as to allow the coil to be removed by pulling the various blades separately out, in the case of a fault.

2. A rotor according to claim 1, characterized in that each turn is constituted by four turn portions (G, A, D) disposed each along one of the four sides of a rectangle which surrounds the pole core (6), each stage of the complete turn being formed by four metal blades (G1, A1, D1) which are substantially rectangular and are two « side » blades (G1, D1) whose long sides extend longitudinally along the two side surfaces (12) of the pole core, and two « end » blades (A1) whose long sides extend substantially circumferentially along the two end surfaces (10) of the pole core, a side blade (G1) and an end blade (A1) being « converging » blades, at each of the four corners of the rectangle of the turn, one of the converging blades (G1) being an « extended » blade, whose length extends beyond the edge of the surface along which it extends to occupy a « corner zone » (G1E) which extends breadthwise along the other blade (A1) so as to substantially ensure the continuity of the width of the layer,

— the extended blades of the successive stages being at each corner alternately a side blade (G1, G3) and an end blade (A2, A4), so as to stagger the separation lines between converging blades,

— the clamping means for the coil having a tie-rod (32) which extends radially at each corner over the entire height of the coil and passes through holes in the extended metal blades (G1, A2, G3, A4) and in the insulating layers (15) in the corner zone, this tie-rod being provided at at least one of its ends with adjustable bearing means (34) to ensure the radial clamping of the coil.

**Patentansprüche**

1. Rotor mit ausgeprägten Polen für eine dynamoelektrische Maschine mit ohne Demontage der Pole abnehmbaren Spulen, wobei dieser Rotor um eine Längsachse (2) dreht und enthält

— eine magnetische Felge (4) von zylindrischer Form um die Achse,

— magnetische Polkerne (6), die so befestigt sind, daß sie in radialer Höhe Vorsprünge auf der Felge bilden, und die auf dem Umfang verteilt sind, wobei jeder dieser Kerne zwei Endflanken in Längsrichtung (10) in zwei zur Rotorachse senkrecht liegenden Ebenen und zwei seitliche Flanken (12) aufweist, die sich in Längsrichtung zwischen diesen beiden Endflanken erstrecken,

— einen Magnetpolkopf (8) am radial äußeren Ende jedes Polkerns (6), der zumindest in Umfangsrichtung auf jeder Seite dieses Kerns vorsteht,

— und eine Spule (14) bestehend aus einem elektrischen Leiter, der um jeden Polkern zwischen der Felge und dem vorstehenden Teil des Polkopfes gewickelt ist, wobei dieser Leiter eine Folge von Windungen bildet, die je einmal um den Polkern gewunden sind und die voneinander durch Isolierschichten isoliert sind,

— wobei jede dieser Windungen selbst längs in mehrere aufeinanderfolgende Windungsabschnitte (G, A, D) aufgeteilt ist, die je von mehreren in starren, radial aufeinanderfolgenden Etagen übereinanderliegenden Metallamellen (G1, G2, G3, G4, A1, A2, A3, A4) gebildet werden, wobei ihre Breiten senkrecht zu den Flanken (10, 12) des Polkerns angeordnet sind und jede dieser Lamellen sich über höchstens eine Steitenflanke, eine Außenflanke und die andere Seitenflanke des Polkerns erstreckt, um den Einbau der Spule durch Verschieben der Lamelle parallel zur Rotorachse (2) zu ermöglichen,

— wobei diese Etagen in der Verlängerung der einzelnen Windungsabschnitte zum jeweils nächsten liegen,

— wobei die Trennlinien zwischen den Enden zweier in einer gleichen Etage liegenden Lamellen in zwei aufeinanderfolgenden Windungsabschnitten von einer Etage zur nächsten versetzt sind, um den elektrischen Strom, der auf eine Trennlinie zwischen zwei Lamellen (G1, A1) einer Etage trifft, zu veranlassen, in mindestens eine Lamelle (A2) einer benachbarten Etage überzutreten,

— dadurch gekennzeichnet, daß diese Spule permanente Spannmittel (32, 34) aufweist, mit denen eine permanente und im wesentlichen radial gerichtete Spannkraft auf jede Endzone (GIE) jeder Lamelle (G1) jedes Wicklungsabschnitts (G) angewandt wird und die somit einen guten elektrischen Kontakt zwischen den Lamellen der aufeinanderfolgenden Windungsabschnitte sichern, wobei diese Spannmittel lösbar sind, so daß es möglich ist, die Spule im Fehlerfall zu demontieren, indem die verschiedenen Lamellen einzeln herausgezogen werden.

2. Rotor nach Anspruch 1, dadurch gekennzeichnet, daß jede Windung aus vier Windungsabschnitten (G, A, D) besteht, die je entlang einer der vier Seiten eines Rechtecks, das den Polkern (6) umgibt, angeordnet sind, wobei jede Etage der vollständigen Windung aus vier im wesentlichen rechteckigen Metalllamellen (G1, A1, D1) gebildet werden, nämlich zwei « seitlichen » Lamellen (G1, D1), deren große Seiten sich in Längsrichtung entlang der beiden Seitenflanken (12) des Polkerns erstrecken, und zwei « Endlamellen » (A1), deren große Seiten sich im wesentlichen in Umfangrichtung entlang der beiden Endflanken (10) des Polkerns erstrecken, wobei je eine seitliche Lamelle (G1) und eine Endlamelle (A1) an jeder der vier Ecken des Rechtecks der Windung zusammentreffen und eine dieser beiden zusammentreffenden Lamellen (G1) eine « verlängerte » Lamelle ist, die sich über den Rand der Flanke, entlang der sie verläuft, hinaus erstreckt, um eine « Eckzone » (G1E) zu besetzen, die sich über die Breite der anderen Lamelle (A1) erstreckt, so daß die Kontinuität der Breite der Schicht im wesentlichen erhalten bleibt,

— wobei die verlängerten Lamellen der aufeinanderfolgenden Etagen an jeder Ecke abwechselnd eine seitliche Lamelle (G1, G3) und eine Endlamelle (A2, A4) sind, so daß die Trennlinien zwischen den zusammenlaufenden Lamellen versetzt sind,

— wobei die Spannmittel für die Spule einen Zugbolzen (32) aufweisen, der sich radial an jeder Ecke über die ganze Höhe der Spule erstreckt und durch Löcher verläuft, die in den verlängerten Metallamellen (G1, A2, G3, A4) und in den Isolierschichten (15) in der Eckzone vorgesehen sind, wobei der Zugbolzen an mindestens einem seiner Enden mit regelbaren Andruckmitteln (34) versehen ist, um die radiale Einspannung der Spule sicherzustellen.

# FIG.1

FIG. 2

0 079 584

# FIG.3

# FIG.4

# FIG.5

FIG.6

# FIG. 7